# EUROPÄISCHE PATENTSCHRIFT

(11) **EP 1 754 662 B1**
(45) Veröffentlichungstag und Bekanntmachung des Hinweises auf die Patenterteilung: **30.07.2008**
(21) Anmeldenummer: 06011330.5
(22) Anmeldetag: 01.06.2006
(51) Int. Cl.: B65B 65/00, B65B 57/00, B23Q 11/08

(54) **Verpackungsmaschine mit einem Maschinengehäuse**
Packaging machine with a machine housing
Machine d'emballage avec un carter de machine

(30) Priorität: 15.08.2005 DE 102005038718
(43) Veröffentlichungstag der Anmeldung: 21.02.2007
(73) Patentinhaber: UHLMANN PAC-SYSTEME GmbH & Co. KG, 88471 Laupheim (DE)
(72) Erfinder: Gertitschke, Detlev, 88471 Laupheim (DE); Riekenbrauck, Jörg, 88477 Schwendi (DE)
(74) Vertreter: Hentrich, Swen

(56) Entgegenhaltungen:
- EP-A- 1 178 378
- EP-A1- 1 484 133
- EP-A1- 1 588 797
- EP-A2- 1 471 459
- US-A1- 2004 207 314

## Beschreibung

Gegenstand der Erfindung ist eine Verpackungsmaschine mit einem Maschinengehäuse und mit einer Mehrzahl von Stationen zur Verarbeitung von Produkten, insbesondere Tabletten, Dragees, Zäpfchen oder dergl., und der Aufnahme von Produkten dienenden Folien, mit einer Recheneinheit, einer Bedieneinheit und mehreren Bildschirmen, die über Datenleitungen verbunden sind.

Verpackungsmaschinen mit einem grundsätzlichen Aufbau wie in DE 199 20 479 A1 beschrieben haben sich zu hochkomplexen Vorrichtungen entwickelt, um mit hoher Verläßlichkeit und Produktivität Produkte sicher und dauerhaft zu verpacken. Insbesondere in der Pharmaindustrie sind die Anforderungen im Hinblick auf die Sicherheit von Medikamenten bezüglich Hygiene, Sterilität und Dichtigkeit der Verpackungen nochmals gesteigert. Den Anforderungen kann durch heutige Verpackungsmaschinen genügt werden, bei denen auf Vorratsrollen eine Formfolie und eine Deckfolie bereit gestellt werden, die eine Vielzahl von Stationen durchlaufen, bis letztendlich in Blisterpackungen abgepackte Produkte vorliegen; diese Stationen umfassen im wesentlichen eine Heizstation zum Erwärmen der Formfolie im Hinblick auf deren nachfolgende Verformung in einer Formstation, das Befüllen der in der Formstation in der Formfolie gebildeten Näpfe mit den Produkten in einer Füllstation, an die sich eine Siegelstation zum Siegeln der Näpfe mit der Deckfolie anschließt. Nach der Siegelstation liegen gefüllte Blisterpackungen vor, die in einer Stanzstation aus dem Folienband ausgestanzt werden. Die weitere Verarbeitung der Blisterpackungen erfolgt dann in sogenannten Kartonierern, die im weiteren Sinne auch zu einem Teil der Verpackungsmaschine gezählt werden können und dem Abpacken der Blisterpackungen in Kartons, ggfs. zusammen mit Beipackzetteln dienen.

Die EP 1 481 133 A1 offenbart eine Produktionsmaschine nach dem Oberbegriff des unabhängigen Anspruches 1, wobei ein head-up Display zur Projektion von Informationen auf eine Scheibe genutzt wird

Die vorstehende Aufzählung lässt deutlich werden, dass derartige Verpackungsmaschinen eine große Ausdehnung haben, einer verlässlichen Kontrolle der Verfahrensabläufe bedürfen und entsprechend eine Vielzahl von Eingriffsmöglichkeiten des Bedieners gegeben ist. Dazu dient die Eingabeeinheit im Zusammenwirken mit dem Bildschirm. Allerdings ist aufgrund der Größe der Verpackungsmaschine für den Bediener es in der Regel nicht möglich, sofort die Wirkung seines Eingriffes zu beobachten und zu bewerten, wenn die Wirkung sich an einem Ort der Verpackungsmaschine zeigt, der weit von der Eingabeeinheit entfernt ist.

Der Erfindung liegt daher die Aufgabe zugrunde, eine Verpackungsmaschine der eingangs genannten Art so auszubilden, dass für den Bediener eine verbesserte Kontroll- und Eingriffsmöglichkeit geschaffen wird.

Diese Aufgabe wird mit einer Verpackungsmaschine nach Anspruch 1 gelöst. Mit dieser Gestaltung ist der Vorteil verbunden, dass dezentral an mehreren Stellen der Verpackungsmaschine, insbesondere in deren Längsrichtung der Bediener die erforderlichen Kontrollen und Eingriffe durchführen kann in unmittelbarer Nähe der Station, Baugruppe, des Bauteils oder Verfahrensschritts, der relevant ist. Der Bediener muss also nicht mit Zeitverlust zwischen der Eingabeeinheit und dem relevanten Ort pendeln und erreicht so schneller den gewünschten Normalzustand des Verpackungsprozesses. Besonders günstig ist dabei die Anordnung des Flach-Displays in den Fenstern des Maschinengehäuses, da die mit der Erfindung verbundenen Vorteile erreicht werden, ohne dass sich der Platzbedarf erhöht oder die Zugänglichkeit eingeschränkt wird, weil das Maschinengehäuse genutzt wird, in dem ohne weiteres Fenster eingebracht oder bereits vorhandene Fenster genutzt werden können. Damit entfallen auch die aufwändigen Untersuchungen zur geeigneten Platzierung einer einzelnen Bedieneinheit, die bei bekannten Verpackungsmaschinen stets erfolgen mussten. Das Flach-Display liegt geschützt hinter Glas und behindert nicht die Reinigung oder die Einhaltung der Kriterien für einen Reinraum. Das Fenster weist zwei Glasscheiben auf, zwischen denen das Flach-Display mit einem Haftvermittler angeordnet ist. Das Flach-Display ist dadurch geschützt und es liegen plane Flächen vor, die leicht zu reinigen sind. Das Flach-Display ist als ein OLED-Display gestaltet. OLED-Displays zeichnen sich durch ihre besonders flache Bauweise auf, die ideal zwischen den Scheiben des Fensters positioniert werden. Die OLED-Displays können transparent geschaltet werden und ermöglichen so auch die Verwendung des Fensters als solches, außerdem liegen die Kosten für ein Verbundfenster mit dem OLED-Display deutlich unter den Kosten für einen PC mit Bildschirm.

Um nicht nur auf dem Bildschirm in unmittelbarer Nähe die Auswirkungen des Benutzereingriffes beobachten zu können, kann die Bedieneinheit mehrfach vorgesehen sein, wobei jede der Bedieneinheiten in der Sichtlinie eines der Flach-Displays angeordnet ist.

Da der Bediener in der Regel mit den Standardperipherie-Geräten eines Computers vertraut ist, bietet es sich an, dass die Bedieneinheit als eine Tastatur und/oder eine Computermaus und/oder ein Trackball und/oder ein Joystick und/oder ein Mikrofon mit der Rechnereinheit zugeordneter Spracherkennung gestaltet ist.

Vorteilhaft ist es, wenn die Bedieneinheit als ein der Scheibe zugeordnetes Touchscreen gestaltet ist, da so die integrierten Bedieneinheiten als Bedienfelder in der Scheibe ebenso einfach zu reinigen sind wie die Bildschirme. Es entfallen hervorstehende Teile einer Bedientafel, die die Zugänglichkeit der Verpackungsmaschine beeinträchtigt und an der sich die Bediener stoßen können.

Alternativ besteht auch die Möglichkeit, daß die Bedieneinheit mobil ausgeführt und als kabellose Fernbedienung ausgelegt ist, um so Kosten für eine Vielzahl von Bedieneinheiten einzusparen, insbesondere da mit modernen Technologien wie WLAN oder Bluetooth die Anbindung der Fernbedienung problemlos möglich ist.

Eine weitere ganz bevorzugte Ausführungsform ist dadurch gekennzeichnet, daß Sensoren und/oder Kameras und/oder Detektoren zur Überprüfung des Betriebszustandes der Stationen und/oder der Kontrolle der Arbeitsabläufe und/oder der Produkte vorgesehen sind, deren Daten in die Recheneinheit einspeisbar und auf dem Bildschirm darstellbar sind. Damit ergibt sich die Möglichkeit, daß Störmeldungen direkt an der Stelle ihres Auftretens angezeigt werden, also der Bediener zugleich eine Überblick über den Prozeß, den Sensor oder die vom Sensor erfaßten Daten erhält. So können auch fehlerhafte Produkte auf dem Bildschirm visualisiert werden, insbesondere aus einem Blickwinkel, der sonst dem Bediener nicht zur Verfügung steht.

Zur Unterstützung des Bedieners ergibt sich dadurch auch die Möglichkeit, daß durch die Recheneinheit Bildschirmmasken auf dem Bildschirm darstellbar sind zur Darstellung des Ist-Zustandes und/oder des Sollzustandes der Arbeitsabläufe und/oder der Produkte. Der Bediener hat also jeweils an der relevanten Stelle Einblick in zusätzliche Informationen über die Verpackungsmaschine, den Verpackungsprozeß oder die Produkte, so daß ein ordnungsgemäßer Ablauf schneller erreicht werden kann, sei es bei einem Start der Verpackungsmaschine oder nach der Beseitigung einer Störung.

Es bietet sich bei Realisierung der Erfindung an, daß das Maschinengehäuse eine Mehrzahl von Schutztüren aufweist, in denen die Fenster angeordnet sind, da so nicht nur eine optische Kontrolle durch das Fenster erfolgen kann, sondern auch die Zugänglichkeit erleichtert ist.

Eine weitere ganz bevorzugte Ausführungsform der Erfindung ist dadurch gekennzeichnet, daß die Verkleidungen des Maschinengehäuses aus Verbundglas bestehen, zwischen dessen Scheiben das Flach-Display und/oder die Eingabeeinheit angeordnet ist. Mit dieser Gestaltung ist die Möglichkeit geschaffen, zur Darstellung von Arbeitsabläufen diese schematisch nicht durch ein Abbild zu zeigen, sondern dem Bediener den Arbeitsablauf selber zu zeigen und diesen als ein Darstellungsmittel zu nutzen, zu dem ergänzend in Echtzeit und am richtigen Ort Informationen am Bildschirm angezeigt werden. Auf dem Bildschirm kann beispielweise im Falle einer Störung bei semitransparenter Darstellung direkt über dem betreffenden Bauteil ein Indikator, Pixel oder ähnliches aufleuchten, so daß in besonders bedienerfreundlicher Weise die Sensorinformationen ausgewertet und visualisiert werden. Dies ist auch günstig im Hinblich auf die Dauer von Schulungs- und Anlernzeiten für den Bediener.

Statt einer ganzflächigen Ausbildung des Maschinengehäuses als Verkleidungsbildschirm besteht auch die Möglichkeit, daß das Fenster mit dem Flach-Display vor einem überwachungsbedürftigen Abschnitt mindestens einer der Stationen oder eines Verarbeitungsschrittes angeordnet ist.

Wenn den Schutztüren Sensoren zur Detektion ihrer Drehlage zugeordnet sind für die wahlweise angepaßte Darstellung des Flach-Displays auf der Vorderseite oder der Rückseite der Schutztür, dann hat der Bediener auch bei geöffneter Schutztür einfachen Zugang zu den Informationen, die bereitgestellt werden können.

Im folgenden wird die Erfindung an einem in der Zeichnung dargestellten Ausführungsbeispiel näher erläutert; es zeigen:

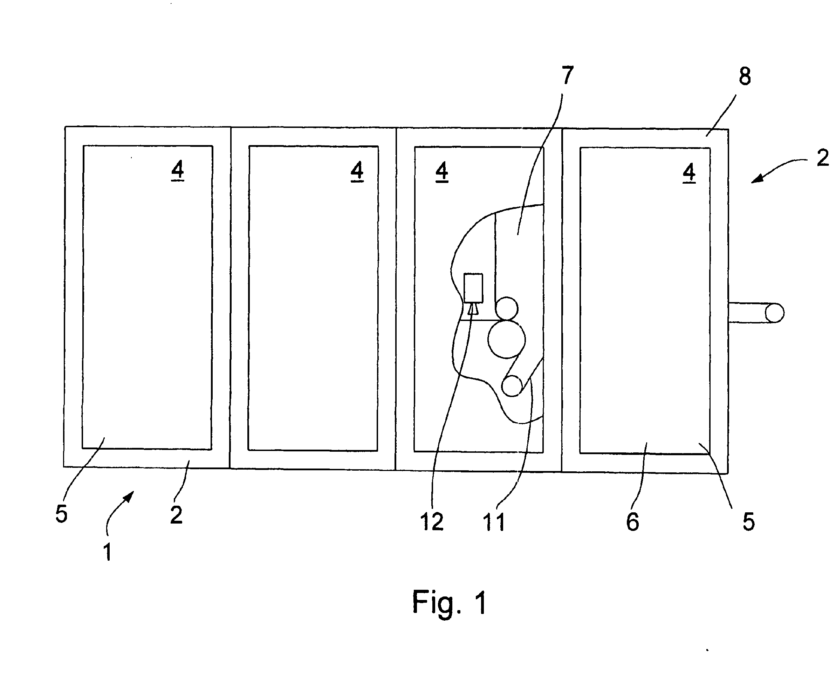

- Fig. 1: eine schematische Darstellung einer Verpackungsmaschine mit ihrem die Fenster aufweisenden Maschinengehäuse,

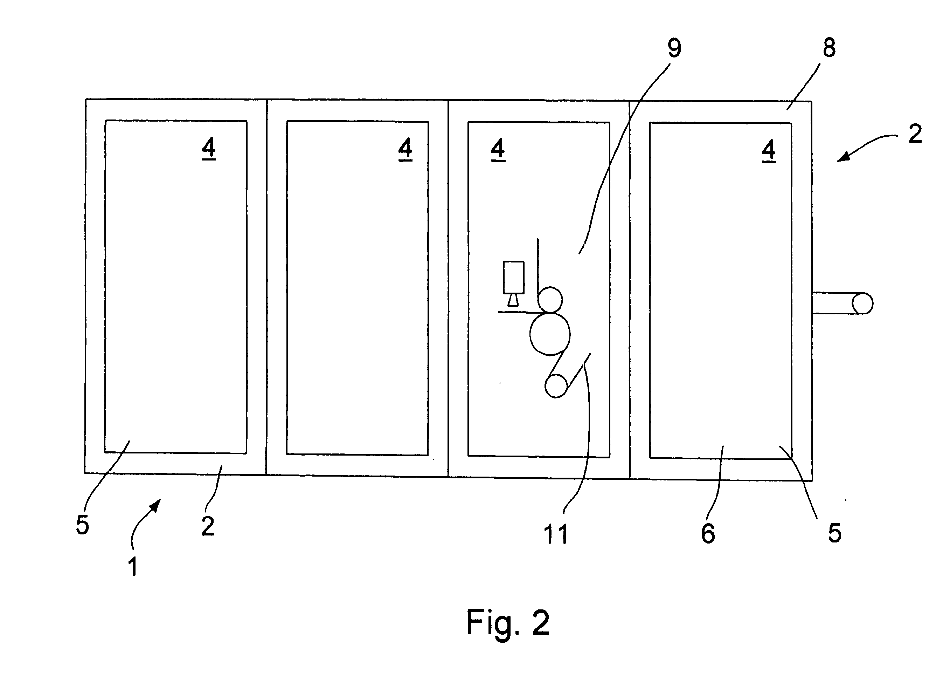

- Fig. 2: eine Vorderansicht der Mehrzahl der Schutztüren des Maschinengehäuses,

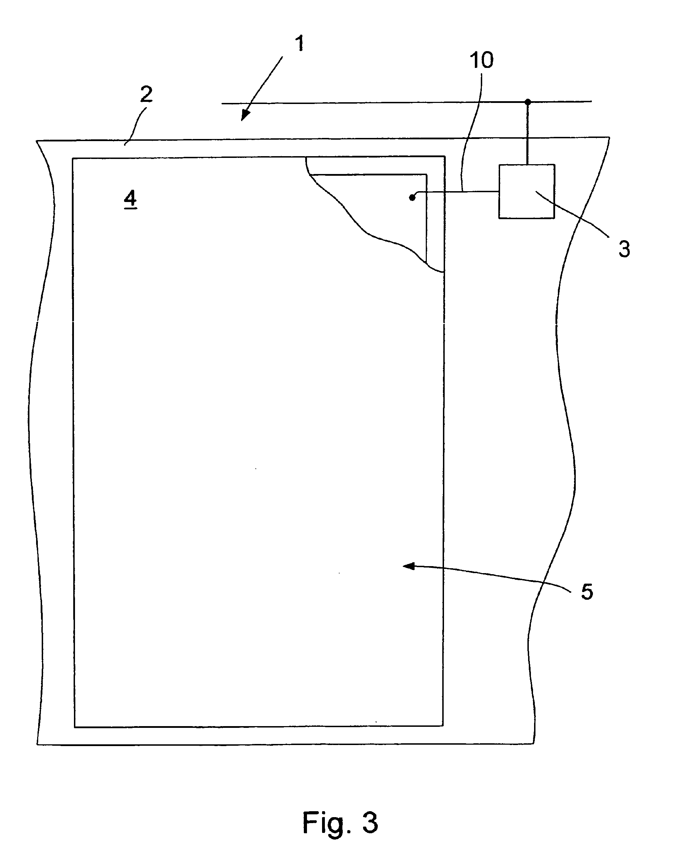

- Fig. 3: einen Ausschnitt eines Fensters mit dem Flach-Display sowie der zugeordneten Bedieneinheit,

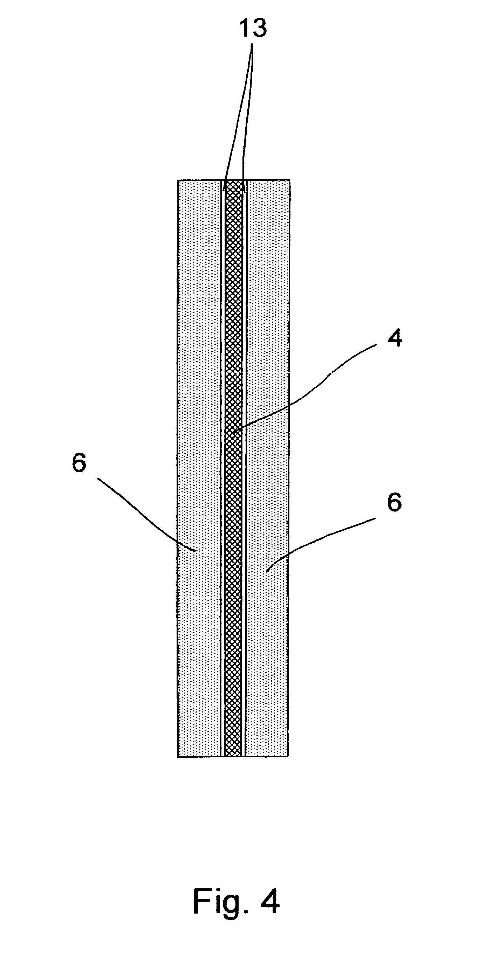

- Fig. 4: einen Schnitt durch das Fenster mit dem zwischen den Scheiben unter Nutzung des Haftvermittlers angeordneten Flach-Display.

In der Zeichung ist eine Verpackungsmaschine 1 dargestellt, die ein Maschinengehäuse 2 aufweist, durch das eine Vielzahl von Stationen 7 gekapselt ist, die der Verarbeitung von Produkten, insbesondere Tabletten, Dragees, Zäpfchen oder dergl., und der Aufnahme der Produkte dienenden Folien 11 dienen. Die Verpackungsmaschine 1 verfügt über eine Recheneinheit, eine Bedieneinheit 3 und einen Bildschirm 4, die über Datenleitungen 10 verbunden sind, wobei der Bildschirm 4 mehrfach vorgesehen ist und das Maschinengehäuse 2 eine Mehrzahl von Fenstern 5 mit mindestens einer Glasscheibe 6 aufweist, auf der als Bildschirm 4 jeweils ein Flach-Display angeordnet ist, das über die Datenleitung 10 mit der Bedieneinheit 3 verbunden ist.

Dabei weist das Fenster zwei Glasscheiben 6 auf, zwischen denen das Flach-Display mit einem Haftvermittler 13 angeordnet ist, das selber als ein OLED-Display gestaltet ist.

Auch die Bedieneinheit 3 ist mehrfach vorgesehen, wobei jede der Bedieneinheiten in der Sichtlinie eines der OLED-Display angeordnet ist. Die Bedieneinheit 3 ist als eine Tastatur und/oder eine Computermaus und/oder ein Trackball und/oder ein Joystick und/oder ein Mikrofon mit der Recheneinheit zugeordneter Spracherkennung gestaltet oder - im Rahmen der Erfindung bevorzugt, als ein der Glasscheibe 6 zugeordneter Touchscreen gestaltet.

Nach einer alternativen Ausführungsform, die in der Zeichnung nicht dargestellt ist, ist die Bedieneinheit 3 mobil ausgeführt und als kabellose Fernbedienung ausgelegt.

Weiterhin weist die Verpackungsmaschine 1 Sensoren 12 und/oder Kameras und/oder Detektoren zur Überprüfung des Betriebszustandes der Stationen 7 und/oder der Kontrolle der Arbeitsabläufe und/oder der Produkte auf, deren Daten in die Recheneinheit einspeisbar und auf dem Bildschirm 4 darstellbar sind.

Damit sind sehr detailliert die Abläufe in der Verpackungsmaschine 1 visualisierbar und es können durch die Recheneinheit Bildschirmmasken 9 auf dem Bildschirm 4 dargestellt werden zur Darstellung des Ist-Zustandes und/oder des Sollzustandes der Arbeitsabläufe und/oder der Produkte. Zu beachten ist auch, daß die Verkleidungen des Maschinengehäuses 2 insgesamt aus Verbundglas bestehen können als Träger für den Bildschirm 4, wobei zwischen dessen Glasscheiben 6 das Flach-Display und/oder die Eingabeeinheit 3 angeordnet ist.

Die Realisierung der Erfindung ist auch kompatibel mit der gewünschten Anordnung von Schutztüren 8 in dem Maschinengehäuse 2, in denen die Fenster 5 angeordnet sind, wobei zweckmäßigerweise den Schutztüren 8 Sensoren 12 zur Detektion ihrer Drehlage zugeordnet sind für die wahlweise angepaßte Darstellung auf dem Flach-Display auf der Vorderseite oder der Rückseite der Schutztür 8.

## Patentansprüche

1. Verpackungsmaschine mit einem Maschinengehäuse (2) und mit einer Mehrzahl von Stationen (7) zur Verarbeitung von Produkten, insbesondere Tabletten, Dragees, Zäpfchen oder dergl., und der Aufnahme von Produkten dienenden Folien (11), mit einer Recheneinheit, einer Bedieneinheit (3) und mehreren Bildschirmen (4), die über Datenleitungen (10) verbunden sind, wobei das Maschinengehäuse (2) eine Mehrzahl von Fenstern (5) mit jeweils mindestens einer Glasscheibe (6) aufweist, auf der als jeweiliger Bildschirm (4) jeweils ein Flach-Display angeordnet ist, das über die Datenleitung (10) mit der Bedieneinheit (3) verbunden ist, **dadurch gekennzeichnet, dass** das Fenster (5) zwei Glasscheiben (6) aufweist, zwischen denen das Flach-Display mit einem Haftvermittler (13) angeordnet ist, wobei das Flach-Display als ein OLED-Display gestaltet ist.

2. Verpackungsmaschine nach Anspruch 1, **dadurch gekennzeichnet, dass** mehrere Bedieneinheiten (3) vorgesehen sind, und dass jede der Bedieneinheiten (3) in der Sichtlinie eines der Flach-Display angeordnet ist.

3. Verpackungsmaschine nach Anspruch 1 oder 2, **dadurch gekennzeichnet, dass** die Bedieneinheit (3) als eine Tastatur und/oder eine Computermaus und/oder ein Trackball und/oder ein Joystick und/oder ein Mikrofon mit der Recheneinheit zugeordneter Spracherkennung gestaltet ist.

4. Verpackungsmaschine nach einem der Ansprüche 1 bis 3, **dadurch gekennzeichnet, dass** die Bedieneinheit (3) als ein der Glasscheibe (6) zugeordnetes Touchscreen gestaltet ist.

5. Verpackungsmaschine nach einem der Ansprüche 1 bis 4, **dadurch gekennzeichnet, dass** die Bedieneinheit (3) mobil ausgeführt und als kabellose Fernbedienung ausgelegt ist.

6. Verpackungsmaschine nach einem der Ansprüche 1 bis 5, **dadurch gekennzeichnet, dass** Sensoren (12) und/oder Kameras und/oder Detektoren zur Überprüfung des Betriebszustandes der Stationen (7) und/oder der Kontrolle der Arbeitsabläufe und/oder der Produkte vorgesehen sind, deren Daten in die Recheneinheit einspeisbar und auf dem Bildschirm (4) darstellbar sind.

7. Verpackungsmaschine nach einem der Ansprüche 1 bis 6, **dadurch gekennzeichnet, dass** durch die Recheneinheit Bildschirmmasken (9) auf dem Bildschirm (4) darstellbar sind zur Darstellung des Ist-Zustandes und/oder des Sollzustandes der Arbeitsabläufe und/oder der Produkte.

8. Verpackungsmaschine nach einem der Ansprüche 1 bis 7, **dadurch gekennzeichnet, dass** das Maschinengehäuse (2) eine Mehrzahl von Schutztüren (8) aufweist, in denen die Fenster (5) angeordnet sind.

9. Verpackungsmaschine nach einem der Ansprüche 4 bis 8, **dadurch gekennzeichnet, dass** die Verkleidungen des Maschinengehäuses (2) aus Verbundglas bestehen, zwischen dessen Glasscheiben (6) das Flach-Display und/oder die Bedieneinheit (3) angeordnet ist.

10. Verpackungsmaschine nach einem der Ansprüche 1 bis 9, **dadurch gekennzeichnet, dass** das Fenster (5) mit dem Flach-Display vor einem überwachungsbedürftigen Abschnitt mindestens einer der Stationen (7) oder eines Verarbeitungsschrittes angeordnet ist.

11. Verpackungsmaschine nach einem der Ansprüche 8 bis 10, **dadurch gekennzeichnet, dass** den Schutztüren (8) Sensoren (12) zur Detektion ihrer Drehlage zugeordnet sind für die wahlweise angepasste Darstellung auf dem Flach-Displays auf der Vorderseite oder der Rückseite der Schutztür (8).

## Claims

1. Packaging machine with a machine casing (2) and with a plurality of stations (7) for processing products, in particular tablets, dragées, suppositories or the like, and foils (11) serving to house products, with a computing unit, a control unit (3) and several screens (4) which are connected via data lines (10), wherein the machine casing (2) has a plurality of windows (5) each with at least one glass sheet (6) on each of which is arranged as respective screen (4) a flat screen which is connected to the control unit (3) via the data line (10), **characterized in that** the window (5) has two glass sheets (6) between which the flat screen is arranged with an adhesion promoter (13), wherein the flat screen is configured as an OLED display.

2. Packaging machine according to claim 1, **characterized in that** several control units (3) are provided, and each of the control units (3) is arranged in the line of sight of one of the flat screens.

3. Packaging machine according to claim 1 or 2, **characterized in that** the control unit (3) is configured as a keyboard and/or a computer mouse and/or a track ball and/or a joystick and/or a microphone with speech recognition allocated to the computing unit.

4. Packaging machine according to one of claims 1 to 3, **characterized in that** the control unit (3) is configured as a touch screen allocated to the glass sheet (6).

5. Packaging machine according to one of claims 1 to 4, **characterized in that** the control unit (3) is designed mobile and with wireless remote control.

6. Packaging machine according to one of claims 1 to 5, **characterized in that** sensors (12) and/or cameras and/or detectors are provided to check the operating status of the stations (7) and/or monitor the procedures and/or the products, the data from which can be fed into the computing unit and displayed on the screen (4).

7. Packaging machine according to one of claims 1 to 6, **characterized in that**, through the computing unit, screen masks (9) can be displayed on the screen (4) to show the actual status and/or the target status of the procedures and/or of the products.

8. Packaging machine according to one of claims 1 to 7, **characterized in that** the machine casing (2) has a plurality of protective doors (8) in which the windows (5) are arranged.

9. Packaging machine according to one of claims 4 to 8, **characterized in that** the coverings of the machine casing (2) consist of laminated glass between the glass sheets (6) of which the flat screen and/or the control unit (3) is arranged.

10. Packaging machine according to one of claims 1 to 9, **characterized in that** the window (5) with the flat screen is arranged in front of a section requiring monitoring of at least one of the stations (7) or a processing step.

11. Packaging machine according to one of claims 8 to 10, **characterized in that** sensors (12) are allocated to the protective doors (8) to detect their rotational position for adapted presentation on the flat screen on either the front or the back of the protective door (8).

## Revendications

1. Machine d'emballage comprenant un carter de machine (2) et une pluralité de postes (7) de traitement de produits, en particulier des comprimés, des dragées, des suppositoires ou similaires et des pellicules (11) servant à accueillir les produits, ainsi qu'une unité de calcul, une unité de commande (3) et plusieurs écrans (4) reliés par des lignes de données (10), le carter de machine (2) présentant une pluralité de fenêtres (5) dont chacune porte au moins une vitre (6) sur laquelle est disposé en tant qu'écran (4) un écran plat qui est relié par la ligne de données (10) à l'unité de commande (3), cette machine étant **caractérisée en ce que** la fenêtre (5) comprend deux vitres (6) entre lesquelles est monté l'écran plat par l'intermédiaire d'un agent adhésif (13), cet écran plat étant un écran OLED.

2. Machine d'emballage selon la revendication 1, **caractérisée en ce qu'**il est prévu plusieurs unités de commande (3) dont chacune est disposée dans la ligne visuelle d'un des écrans plats.

3. Machine d'emballage selon la revendication 1 ou 2, **caractérisée en ce que** l'unité de commande (3) est constituée par un clavier et/ou par une souris d'ordinateur et/ou par un trackball et/ou par un joystick et/ou par un microphone avec reconnaissance de la parole associée à l'unité de calcul.

4. Machine d'emballage selon une des revendications 1 à 3, **caractérisée en ce que** l'unité de commande (3) est constituée par un écran tactile associé à la vitre (6).

5. Machine d'emballage selon une des revendications 1 à 4, **caractérisée en ce que** l'unité de commande (3) est mobile et présente une configuration qui est celle d'une commande à distance sans fil.

6. Machine d'emballage selon une des revendications 1 à 5, **caractérisée en ce qu'**il est prévu des capteurs (12) et/ou des caméras et/ou des détecteurs pour contrôler l'état de fonctionnement des postes (7) et/ou le déroulement des opérations et/ou les produits, les données correspondantes pouvant être enregistrées dans l'unité de calcul et présentées sur l'écran (4).

7. Machine d'emballage selon une des revendications 1 à 6, **caractérisée en ce que** l'unité de calcul peut faire apparaître sur l'écran (4) des masques d'écran (9) afin de représenter l'état réel et/ou l'état de consigne des déroulements des opérations et/ou des produits.

8. Machine d'emballage selon une des revendication 1 à 7, **caractérisée en ce que** le carter de machine (2) présente une pluralité de portes de protection (8) dans lesquelles sont disposées les fenêtres (5).

9. Machine d'emballage selon une des revendications 4 à 8, **caractérisée en ce que** les revêtements du carter de machine (2) sont en verre feuilleté, entre les feuillets (6) duquel est disposé l'écran plat et/ou l'unité de commande (3).

10. Machine d'emballage selon une des revendications 1 à 9, **caractérisée en ce que** la fenêtre (5) avec son écran plat est disposée devant une partie, nécessitant une surveillance, d'au moins un des postes (7) ou d'une étape de traitement.

11. Machine d'emballage selon une des revendications 8 à 10, **caractérisée en ce qu'**aux portes de protection (8) sont affectés des capteurs pour détecter la position de rotation de la porte correspondante et en donner une représentation adaptée à volonté sur l'écran plat, du côté avant ou arrière de la porte de protection (8).
